# EUROPEAN PATENT SPECIFICATION

(11) **EP 0 773 157 B1**
(45) Date of publication and mention of the grant of the patent: **04.02.2004**
(21) Application number: 96117855.5
(22) Date of filing: 07.11.1996
(51) Int. Cl.: B62J 6/12

(54) **Hub dynamo for bicycle**
Radnabendynamo für Fahrrad
Dynamo de moyeu de roue pour bicyclette

(30) Priority: 10.11.1995 JP 31587695; 10.11.1995 JP 31587795
(43) Date of publication of application: 14.05.1997
(73) Proprietor: SANYO ELECTRIC Co., Ltd., Moriguchi-shi, Osaka 570 (JP)
(72) Inventor: Fukuda, Hitoshi, Kanzaki-gun, Hyogo (JP)
(74) Representative: Glawe, Delfs, Moll & Partner

(56) References cited:
- EP-A- 0 591 724
- WO-A-84/04285
- DE-U- 9 103 070
- US-A- 4 677 328
- PATENT ABSTRACTS OF JAPAN vol. 95, no. 011 & JP 07 291166 A (SANYO ELECTRIC CO LTD), 7 November 1995,
- PATENT ABSTRACTS OF JAPAN vol. 1996, no. 03 29 March 1996 & JP 07 291 166 A (SANYO ELECTRIC CO LTD) 07 November 1995

## Description

### FIELD OF THE INVENTION

This invention relates to an improvement in a hub dynamo for a bicycle.

### KNOWN ART

Recent years bicycle manufacturers have been confronted with competitions in manufacturing low-cost products, so that they have been attempting to reduce the number of optional items for a bicycle. However, a bicycle dynamo is indispensable for a bicycle for its safe driving, especially during night time. One common type of dynamos manufactured for this purpose is a hub dynamo.

A hub dynamo for a bicycle (hereinafter referred to as bicycle hub dynamo or simply as hub dynamo) is a dynamo which is mounted on a hub of a bicycle, as described in for example Japanese Utility Model Publication No. 57-49584.

This publication describes a hub dynamo having a structure as shown in Fig. 5, which we shall briefly discuss below for better understanding of a bicycle hub dynamo. A hub dynamo has stator coils 48 which are mounted on a shaft 41 of a bicycle by a plate 47, and a rotor constituting of magnets 45 and yokes 46. The magnets 45 and the yokes 46 are secured on an aluminum hub drum 44, which drum is in turn fixed on a hub body 43. The stator (plate 47 and coils 48) and the rotor (hub body 43, hub drum 44, magnets 45 and yokes 46) are rotatably coupled with each other via bearings 42.

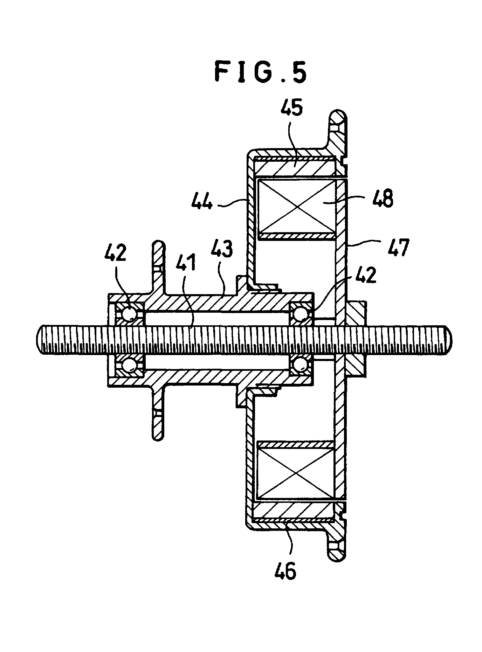

As seen in Fig. 5, these bearings are simply fitted in the opposite ends of the hub body 43 to couple the stator with the rotor. Consequently, the bearings are likely to drop from the hub body 43 during assembly of the shaft 41 through the inner liners of the bearings 42 if the shaft abuts on the edges of inner liners. This causes a disadvantage that the assembly of the hub must be done very carefully, so that it is a time taking job and contributes to the cost of such hub dynamo.

This type of hub dynamos have another disadvantage that magnetic circuits formed in the hub dynamo are affected by dust which has infiltrated from a gap between the plate 47 and the hub drum 44 and accumulated in the stator coil 48 over a long period of time, thereby weakening the magnetic flux through the coil and lowering the generating power of the hub dynamo.

The hub dynamo has a further disadvantage that the aluminum hub drum 44 requires machining and grinding thereof after it is cast. In addition, the aluminum hub drum 44 requires iron yokes such as the yokes 46 inside the hub drum 44 for enhancing the magnetic flux through the stator coils 48. This disadvantageously add a further process and cost to the hub dynamo.

A Hub dynamo with a reduced magnetic flux leakage is further known from Patent Abstract of Japan 07291166.

### SUMMARY OF THE INVENTION

The invention is aimed to alleviate these prior art problems by providing an improved hub dynamo for bicycle which has a simple structure as well as good sealability against dust. Thus, the bicycle hub dynamo may be manufactured at a reduced cost and assembled in a simple manner.

This aim is achieved by a hub dynamo according to the features of claim 1.

It is further an object of the invention to provide a bicycle hub dynamo having an iron dynamo case which may simultaneously substitute for a conventional aluminum dynamo case and conventional annular iron yokes forming a part of the magnetic circuits. Such iron dynamo case may be fabricated through a sequence of simple press works.

Since use of such iron dynamo case reduces the number of elements of a hub dynamo, it allows reduction of material cost of the dynamo.

It would be appreciated that such iron dynamo case manufactured in press works further contributes reduction of manufacturing cost of a bicycle hub dynamo, since it does not require processes such as casting, machining, grinding and/or coating with a paint as required for aluminum cases.

A hub dynamo for bicycle of the invention comprises: a stator fixedly mounted on an immovable shaft; a rotor including a hub dynamo case, a flange secured on one end of the hub dynamo case, a hub dynamo case cap fitted in the hub dynamo case, and a multiplicity of magnets fixed on the inner wall of the hub dynamo case; a first set of bearings firmly fitted between the flange and the hub dynamo case; and a second set of bearings firmly fitted on the hub dynamo case cap, wherein the shaft is fitted in the first and second set of bearings so that the rotor is rotatably coupled with the stator.

In this arrangement, it would be appreciated that the dynamo case is not only fixed on the flange but also the first bearings are secured between them, so that the bearings are prevented from dropping out of the position and that the shaft may be easily mounted on the bearings and secured by a nut. The same is true with the second set of bearings and the shaft since these bearings are also firmly held in the hub dynamo case cap. It would be also appreciated that the hub dynamo case may be fitted in the hub dynamo case such that it seals the hub dynamo.

### BRIEF DESCRIPTION OF THE DRAWINGS

These and other features of the present invention may be more readily understood by reference to the following description, taken in conjunction with the accompanying drawings, in which:
Fig. 1 is a cross sectional view of a hub dynamo for bicycle according to the invention, taken along the axis of the hub dynamo;
Fig. 2 is an exploded cross sectional view of the hub dynamo shown in Fig. 1;
Fig. 3 is a side view of the hub dynamo shown in Fig. 1, taken from the side thereof a having a flange.
Fig. 4 is a side view of the hub dynamo taken along the line A-A of Fig. 1.
Fig. 5 is a side cross sectional view of a conventional hub dynamo for bicycle.

### DETAILED DESCRIPTION OF THE PREFERRED EMBODIMENT

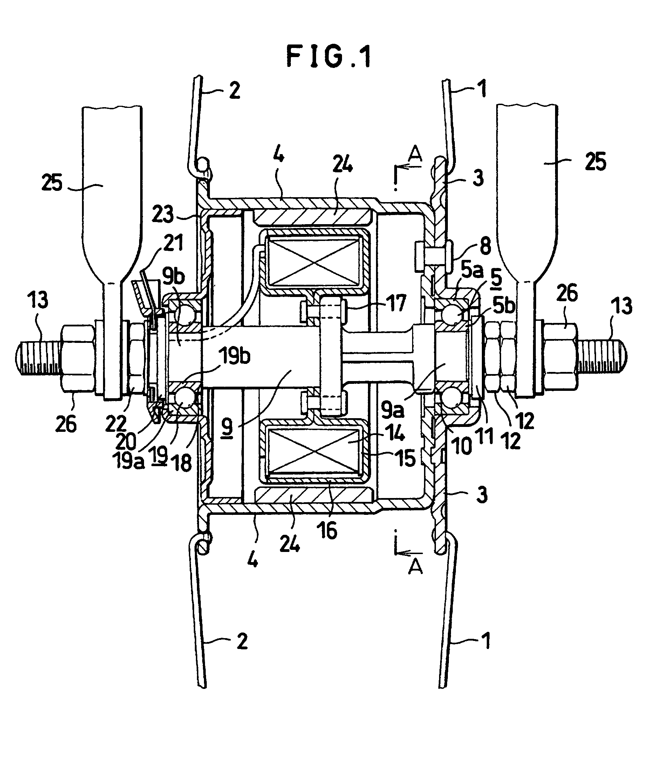

A cross section of a preferred embodiment of the hub dynamo of the present invention is shown in Fig. 1. An iron flange 3 fabricated in the form of generally circular disk and having a central recess formed by press works is fixed on the ends of right spokes 1. An iron dynamo case or casing 4, which may be also fabricated by press works, is fixed on the left spokes 2.

The central recess of the flange 3 receives bearings 5, which are forced therein. The flange 3 is fixed on the dynamo case 4 by rivets 8 so that an outer liner 5a of the bearings 5 is secured in the recess and does not come off the position. The inner liner 5b of the bearings 5 is forced on a bearing section 9a of a sleeve 9 which is made of aluminum by die casting insert molding to firmly fit on a shaft 13 of the bicycle. Thus, the sleeve is integral with the shaft 13. The inner liner 5b is then secured by a washer 11 and nuts 12, so that it is in position between a large-diameter section 10 of the sleeve 9 and the washer 11. The integral sleeve 9 may also be made of a hard plastic molded on the shaft 13.

Secured on the outer surface of the integral sleeve 9 by rivets are stator coils 14, coil bobbins 15, and an iron core 16 of the hub dynamo. The inner liner 19b of bearings 19 is forced on a bearing section of the sleeve 9. The inner liner 19b is secured between a large-diameter section of the sleeve 19 and a washer 20 by a nut 22. An insulating terminal member having output terminals 21 for electrical connections with the hub dynamo is provided between the washer 20 and the nut 22.

The outer liner 19a of the bearings 19 is forced in the central recess of a generally cylindrical dynamo case cap 23. As seen from the Figure, the recess is formed inside a protruding section of a dynamo case cap 23, which may be fabricated by press works.

The dynamo case cap 23 also has a folded rim, which is fitted in the opening of the dynamo case 4.

The dynamo case 4 and the dynamo case cap 23 constitutes the rotor of the hub dynamo. Fixedly secured inside the dynamo case 4 are magnets 24. The iron dynamo case 4 serves as yokes for the magnetic circuits generated by the magnets.

A pair of forks 25 extending from the body of the bicycle are each fixed on the shaft 13 with a pair of bolts 26.

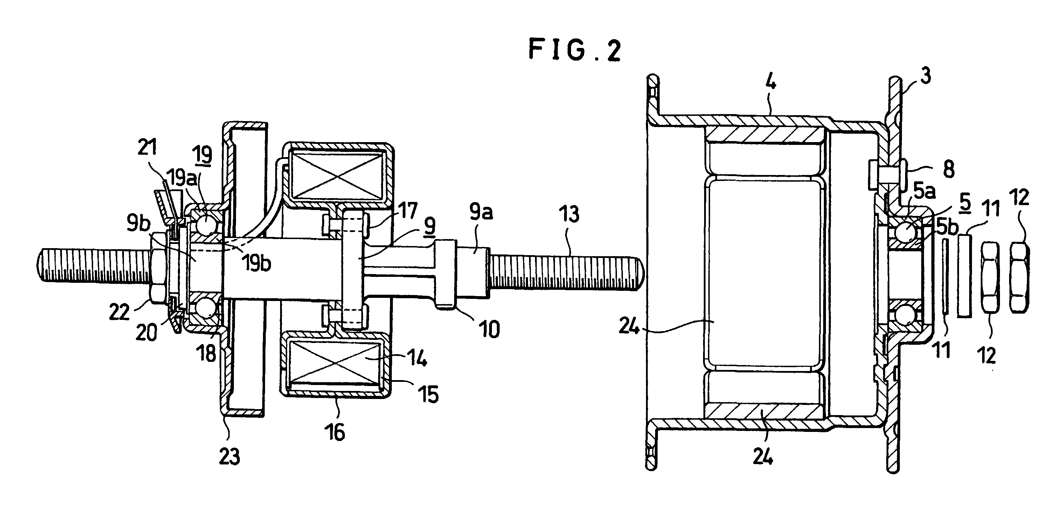

Fig. 2 is an exploded cross section of the hub dynamo, illustrating the process of assembling the hub dynamo. As seen in the Fig. 2, in general the hub dynamo is assembled from a stator section and a rotor section.

To be more specific, the sleeve 9 is first molded on the shaft 13 at a predetermined position thereof so that they are integral with each other. The integral sleeve has bearing sections 9a and 9b which are fitted in the bearings 5 and 19, respectively, and large-diameter sections 10 and 18. The coils 14, the coil bobbins 15 and the iron core 16 are then mounted on the integral sleeve 9 by means of rivets 17 to form the stator section of the dynamo.

Next, the outer liner 19a of the bearings 19 is forced into the central recess of the dynamo case cap 23 and the inner liner 19b of the bearing 19 is mounted on the bearing section 9b of the integral sleeve 9 until the inner liner 19b abuts on the large-diameter section 18 of the sleeve 9. The nut 22 is then threaded on the shaft 13 to secure the bearing 19 in position, with a washer 20 and an insulating terminal plate having terminals 21 inserted between the nut 22 and the large-diameter section 18.

With this nut 22 thus threaded on the shaft 13, the inner liner 19b and the sleeve 9 are firmly fixed on the shaft 13 together, forming the integral stator section.

The dynamo case 4 of the rotor may be fabricated by deep drawing an iron plate through repeated press works to form a cylindrical protrusion at the center of the dynamo case 4. The protrusion provides inside thereof a recess for firmly receiving the magnets 24. Thus, the magnets 24 are fixed on the inner surface of the recess. It would be appreciated that this fabrication of the dynamo case 4 through press works needs no further machining or grinding, and greatly reduces the number of manufacturing processes as required for the prior art aluminum dynamo case, thereby reducing cost of the dynamo.

Next, the outer liner 5a of the bearing 5 is inserted in the central recess of the flange 3, until the dynamo case 4 abuts on the flange 3 and firmly hold the outer liner 5a in the recess. The dynamo case 4 is then fixed on the flange by rivets 8. This results in the rotor section (the right member shown in Fig. 2), which is a major portion of the rotor.

The left member shown in Fig. 2 is then coupled with the right member such that the bearing section 9a of the integral sleeve 9 of the stator is forced into the inner liner 5b of the bearing 5 until the large-diameter section 10 of the sleeve 9 abuts on the inner liner 5b of the bearing 5, and then secured with the inner liner 5b by tightening the nuts 12 on the shaft 13 via the washer 11. It should be noted that in this process the dynamo case cap 23 is fitted in the opening of the dynamo case 4 of the rotor, thereby forming the complete rotor. This coupling of the two members results in a complete hub dynamo as shown in Fig. 1.

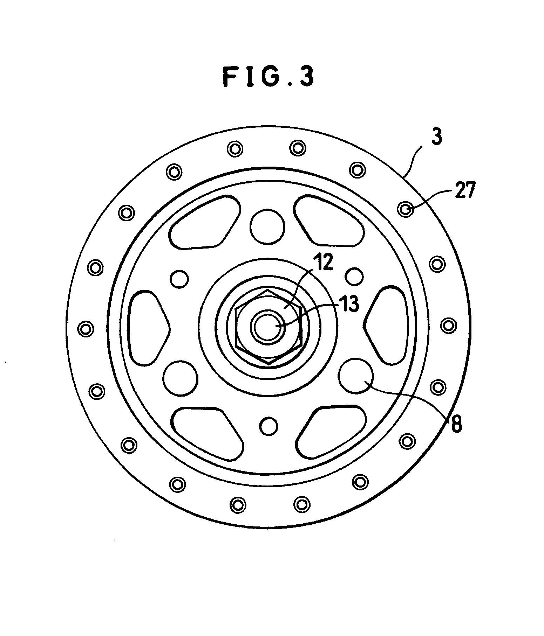

Fig. 3 shows a side view of the hub dynamo thus assembled, taken from the side of the flange 3. As seen in the Figure, the flange 3 is fixed on the dynamo case 4 by rivets 8 as well as on the shaft 13 by nuts 12. The bores 27 formed in the flange 3 receive the spokes 1.

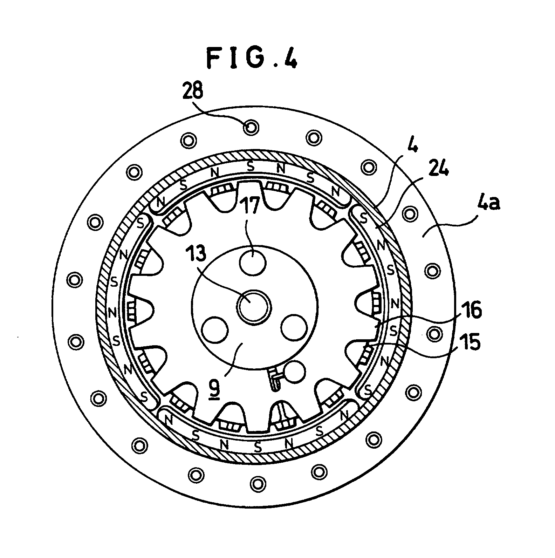

Fig. 4 shows a side cross sectional view of the hub dynamo taken along the line A-A of Fig. 1. Firmly mounted inside the dynamo case 4 are four groups of magnets 24 each having seven magnetic poles constituting a part of the rotor. The stator of the hub dynamo includes the coil bobbins 15 and an iron core 16 both integrally mounted on the sleeve 9 by rivets 17. The sleeve is further fixed on the shaft 13, as previously described. Bores 27 formed along the periphery of the flange section 4a of the dynamo case 4 firmly receive spokes 2.

In operation, the bicycle hub dynamo of the invention as described above may generate electric power by rotating the bicycle wheel on which the dynamo case is mounted, since the rotation of the wheel causes electromagnetic induction due to changes in magnetic fields through the magnetic circuits which are generated through the coils in the coil bobbins 15, the iron core 16, magnets 24, and the iron dynamo case 4.

In summary, hub dynamo of the invention has an advantage that the bearings 5 are prevented from coming off the position during its assembly since the bearings 5 are firmly secured between the dynamo case 4 and the flange 3 while the bearings 19 are firmly fitted in the central recess of the dynamo case cap 23 by the sleeve 9. In addition, the stator and the rotor may be assembled independently, so that the assembly of the hub dynamo may be carried out in a simple manner. Furthermore, since the hub dynamo is essentially enclosed except for the bearings, the hub dynamo is well protected against dust and has an increased durability.

It would be appreciated that the dynamo case of the invention may be fabricated in a sequence of simple press works. It would be also appreciated that the dynamo case serves no only as a case of the dynamo but also as yokes for the magnetic circuits, so that the iron dynamo case of the invention helps reduce the number of elements involved in manufacturing the hub dynamo compared with conventional ones, which in turn allows production of economical bicycle hub dynamos.

## Claims

1. A hub dynamo that can be integrated in a hub of a bicycle, comprising:
an iron dynamo casing (4);
a disk-shaped flange (3) firmly secured on said dynamo casing (4);
magnets (24) directly secured on the inner wall of said dynamo casing (4),
**characterized in that**
said iron dynamo casing (4) has one end which has an opening and an integral flange having holes along the said opening for mounting a part of the spokes (2) of a wheel, and another end which is closed except for the central section thereof;
said disk-shaped flange (3) is mounted on said another end of said dynamo casing (4), has holes for mounting the rest of said spokes (1), and has a central space for housing a first set of bearings (5),
said first set of bearings being firmly fitted in said central space of said disk-shaped flange and firmly held between said disk-shaped flange and said hub dynamo casing; and
said dynamo casing is adapted to work as a hub body of said hub and as yokes of a magnetic circuit associated with said magnets.

2. A hub dynamo according to claim 1, further comprising:
a stator (14-17) mounted fixedly on an axle (13) of said bicycle;
a rotor included in said hub dynamo casing (4);
a hub dynamo casing cap (23) and
a second set of bearings (19);
wherein said second set of bearings (19) is firmly fitted in a recess of said hub dynamo casing cap (23); and
said axle (13) is fitted in said first and second sets of bearings (5, 19).

3. The hub dynamo according to claim 2, wherein said dynamo casing (4) is a deep drawn iron casing.

4. The hub dynamo according to claim 2, wherein
said axle (13) is provided with a sleeve (9) which has on the surface thereof stator coils (14), and has opposite ends abutting on said first and second set of bearings (5,19), respectively; and
said first and second bearings are fixed on said sleeves by nuts (12,22) tightened from the opposite ends of said sleeves, respectively.

## Patentansprüche

1. Radnaben-Dynamo, der in eine Nabe eines Fahrrades integriert werden kann, mit:
einem Dynamogehäuse (4) aus Eisen;
einem scheibenförmigen Flansch (3), der fest an dem Dynamogehäuse (4) befestigt ist;
Magneten (24), die direkt an der Innenwand des Dynamogehäuses (4) befestigt sind,
**dadurch gekennzeichnet, dass**
das Dynamogehäuse (4) aus Eisen ein Ende hat, das eine Öffnung und einen einstükkigen Flansch mit Löchern entlang der Öffnung zum Befestigen eines Teils der Speichen (2) eines Rades hat, und ein anderes Ende hat, das mit Ausnahme des mittleren Abschnittes desselben geschlossen ist;
wobei der scheibenförmige Flansch (3) an dem anderen Ende des Dynamogehäuses (4) befestigt ist, Löcher für das Befestigen der übrigen Speichen (1) und einen zentralen Raum zur Aufnahme des ersten Satzes von Lagern (5) hat,
wobei der erste Satz Lager fest in dem zentralen Raum des scheibenförmigen Flansches eingepaßt und fest zwischen dem scheibenförmigen Flansch und dem Radnaben-Dynamogehäuse gehalten ist; und
das Dynamogehäuse so ausgebildet ist, dass es als ein Nabenkörper der Nabe und als Joch eines Magnetschaltkreises wirkt, der den Magneten zugeordnet sind.

2. Radnaben-Dynamo nach Anspruch 1, weiterhin mit:
einem Stator (14 - 17), der fest an einer Achse (13) des Fahrrades befestigt ist;
einem Rotor, der in dem Radnaben-Dynamogehäuse (4) enthalten ist;
einer Radnaben-Dynamogehäusekappe (23) und
einem zweiten Satz Lager (19);
wobei der zweite Satz Lager (19) fest in eine Aussparung der Radnaben-Dynamogehäusekappe (23) eingepasst ist; und
die Achse (13) in dem ersten und zweiten Satz der Lager (5, 19) befestigt ist.

3. Radnaben-Dynamo gemäß Anspruch 2, wobei das Dynamogehäuse (4) ein tiefgezogenes Eisengehäuse ist.

4. Radnaben-Dynamo nach Anspruch 2, wobei die Achse (13) mit einer Hülse (9) versehen ist, die an ihrer Oberfläche Statorwicklungen (14) hat und einander gegenüberliegende Enden hat, die an dem ersten bzw. zweiten Satz Lager (5, 19) anschlagen; und
die ersten und zweiten Lager an den Hülsen mittels Muttern (12, 22) befestigt sind, die jeweils von den gegenüberliegenden Enden der Hülsen angezogen sind.

## Revendications

1. Dynamo de moyeu qui peut être intégrée dans un moyeu d'une bicyclette, comprenant :
un carter de dynamo en fer (4);
une bride en forme de disque (3) fixé solidement sur ledit carter de dynamo (4);
des aimants (24) directement fixés sur la paroi intérieure dudit carter de dynamo (4), **caractérisé en ce que** ledit carter de dynamo (4) comporte une extrémité avec une ouverture et une bride incorporée munies de trous le long de ladite ouverture pour monter une partie des rayons (2) d'une roue, et une autre extrémité qui est fermée sauf dans la section centrale de celle-ci;
ladite bride en forme de disque (3) est montée sur ladite autre extrémité du carter de dynamo (4), comporte des trous pour monter le reste desdits rayons (1) et comporte un espace central pour loger un premier jeu de paliers (5),
ledit premier jeu de paliers étant solidement inséré dans ledit espace central de ladite bride en forme de disque et maintenu fermement entre ladite bride en forme de disque et ledit carter de dynamo; et
ledit carter de dynamo est adapté pour fonctionner comme un corps de moyeu dudit moyeu et comme culasses d'un circuit magnétique associé aux dits aimants.

2. Moyeu de dynamo selon la revendication 1, comprenant, en outre :
un stator (14-17) monté fixement sur un axe (13) de ladite bicyclette;
un rotor intégré dans ledit carter de dynamo de moyeu (4);
un couvercle de carter de dynamo de moyeu (23) et
un second jeu de paliers (19);
dans lequel ledit second jeu de paliers (19) est solidement inséré dans un évidement dudit couvercle de carter de dynamo de moyeu (23); et
ledit axe (13) est inséré dans lesdits premier et second jeux de paliers (5, 19).

3. Moyeu de dynamo selon la revendication 2, dans lequel ledit carter de dynamo (4) est un carter en fer embouti.

4. Moyeu de dynamo selon la revendication 2, dans lequel ledit axe (13) est muni d'un manchon (9) qui présente sur sa surface des bobines de stator (14) et qui comporte des extrémités opposées butant respectivement contre lesdits premier et second jeux de paliers (5, 19); et
lesdits premier et second paliers sont fixés sur lesdits manchons à l'aide d'écrous (12, 22) respectivement serrés à partir des extrémités opposées desdits manchons.
